(19) Europäisches Patentamt

European Patent Office

Office européen des brevets

(11) **EP 0 506 676 B1**

(12) **EUROPÄISCHE PATENTSCHRIFT**

(45) Veröffentlichungstag und Bekanntmachung des Hinweises auf die Patenterteilung:
**04.02.1998   Patentblatt 1998/06**

(21) Anmeldenummer: 90916710.8

(22) Anmeldetag: **24.11.1990**

(51) Int Cl.6: **G01N 27/12**

(86) Internationale Anmeldenummer:
**PCT/DE90/00909**

(87) Internationale Veröffentlichungsnummer:
**WO 91/09301 (27.06.1991 Gazette 1991/14)**

(54) **WIDERSTANDSMESSFÜHLER ZUR ERFASSUNG VON GASZUSAMMENSETZUNGEN UND VERFAHREN ZU SEINER HERSTELLUNG**

RESISTANCE PROBE FOR MONITORING GAS COMPOSITIONS, AND PROCESS FOR ITS MANUFACTURE

CAPTEUR DE MESURE PAR RESISTANCE POUR LA DETERMINATION DE COMPOSITIONS DE GAZ ET SON PROCEDE DE FABRICATION

(84) Benannte Vertragsstaaten:
**DE ES FR GB IT**

(30) Priorität: **19.12.1989  DE 3941837**

(43) Veröffentlichungstag der Anmeldung:
**07.10.1992   Patentblatt 1992/41**

(73) Patentinhaber: **ROBERT BOSCH GMBH
70442 Stuttgart (DE)**

(72) Erfinder:
 • **FRIESE, Karl-Hermann
   D-7250 Leonberg (DE)**
 • **GRUENWALD, Werner
   D-7016 Gerlingen (DE)**
 • **WIEDENMANN, Hans-Martin
   D-7000 Stuttgart 1 (DE)**
 • **HOETZEL, Gerhard
   D-7000 Stuttgart 50 (DE)**

(56) Entgegenhaltungen:
**EP-A- 193 379          EP-A- 0 007 621
WO-A-90/04171          DE-A- 2 908 916**

 • **PATENT ABSTRACTS OF JAPAN vol. 10, no. 127 (P-455)(2184) 13 Mai 1986, & JP-A-60 253858**
 • **PATENT ABSTRACTS OF JAPAN vol. 6, no. 46 (P-107)(924) 24 März 1982, & JP-A-56 160648**
 • **PATENT ABSTRACTS OF JAPAN vol. 9, no. 269 (P-400)(1992) 26 Oktober 1985, & JP- A-60 115837**
 • **H.Heuschkel und Klaus Muche: ABC Keramik, VEB Deutscher Verlag für Grundstoffindustrie, Leipzig, Stichwort "Engobe"**
 • **Fachlexikon abc chemie, Verlag Harri Deutsch, Frankfurt/Main, 1979, ISBN 3871440027, Stichwort "Engobe"**

## Beschreibung

Stand der Technik

Die Erfindung geht aus von einem Widerstandsmeßfühler und einem Verfahren zur Herstellung eines solchen Meßfühlers gemäß der Gattung des Hauptanspruchs. Es sind schon derartige Widerstandsmeßfühler bekannt, zum Beispiel aus der DE-PS 29 08 916, bei denen in Multilayer-Technik auf einem keramischen Trägerplättchen, durch isolierende Schichten getrennt, ein Heizleiter, Elektroden, ein schichtförmiger Widerstand aus halbleitendem Metalloxid, im folgenden halbleitende Widerstandsschicht genannt, sowie eine gasdurchlässige Schutzschicht aufgebracht sind, wobei die gasdurchlässige Schutzschicht über einer der Elektroden angeordnet ist und von einer Deckschicht bis auf eine Öffnung einer Deckschicht umschlossen ist. Im Versuch hat es sich gezeigt, daß derartige Schutzschichten keine befriedigenden Eigenschaften bezüglich Haftung und Reproduzierbarkeit aufweisen.

In der EP-A-0 007 621 wird ein Widerstandsmeßfühler beschrieben, bei dem ein schichtförmiger Widerstand aus Übergangsmetalloxid, speziell Titandioxid eingesetzt ist. Das Übergangsmetalloxid des Widerstands wird mit einer porösen Schutzschicht aus Magnesiumspinell (MgO • Al$_2$O$_3$) umschlossen. Deshalb ist man gezwungen, das Übergangsmetalloxid des Widerstands auf die Elektrode haftend aufzubringen. Das Meßgas tritt durch die poröse Schutzschicht mit der halbleitenden Widerstandsschicht in Kontakt, die eine sehr große Kontaktfläche aufweist.

Aus der EP-A-0 193 379 ist ferner ein Meßfühler bestehend aus einer Pumpzelle mit ionenleitendem Festelektrolyten und einer Meßzelle mit Schichtwiderstand und Diffusionsabschnitt bekannt. Aufwendig ist die zusätzlich notwendige Pumpzelle mit zusätzlichem Raum- und Materialbedarf trotz der Tatsache, daß auf eine Schutzschicht auf der halbleitenden Widerstandsschicht verzichtet werden kann. Für das Material der halbleitenden Widerstandsschicht werden Übergangsmetalloxide und Mischungen von Übergangsmetalloxiden eingesetzt.

Vorteile der Erfindung

Der erfindungsgemäße Widerstandsmeßfühler mit den kennzeichnenden Merkmalen des Anspruchs 1 hat demgegenüber den Vorteil, daß er eine ausreichende Stabilität des Schichtaufbaus bei Dauerbeanspruchung aufweist. Einerseits wird durch den erfindungsgemäßen Aufbau die chemische Alterung der halbleitenden Widerstandsschicht verzögert, indem eine Korrosion der ausgebildeten halbleitenden Widerstandsschicht durch Schadstoffe aus dem Abgas verhindert wird, zum anderen wird auch die mechanische Alterung verzögert, die auf den Abrieb der halbleitenden Widerstandsschicht durch Partikel in der Strömung zurückzuführen ist. Eine Ablösung der halbleitenden Widerstandsschicht vom Träger ist auch nach langer Betriebsdauer nicht zu beobachten.

Zudem sind die Auftragsverfahren der porösen Engobe-Schutzschicht - Siebdruck, Einlegen einer porös sinternden Folie oder Eintropfen einer Suspension - weniger aufwendig als das bisher eingesetzte Plasmaspritzverfahren.

Das erfindungsgemäße Verfahren zeichnet sich dadurch aus, daß zunächst ein Sensor-Trägerkörper mit Elektroden und integriertem Heizer vorgefertigt und bei hohen Temperaturen gesintert wird, worauf anschließend eine Halbleiterschicht als Widerstandsschicht aufgebracht wird, die die Engobe-Schutzschicht trägt und zusammen mit dieser bei niedrigeren Temperaturen eingesintert wird. Durch diese Verfahrensweise wird der Vorteil erreicht, daß die Engobe-Schutzschicht beim Einsintern wie auch beim späteren Betrieb des Sensors nicht mit der Halbleiterschicht reagieren kann und daher ausreichend stabil ist.

Zeichnung

Zwei Ausführungsbeispiele der Erfindung sind in der Zeichnung dargestellt und in der nachfolgenden Beschreibung näher erläutert.

Fig. 1 zeigt den Aufbau eines erfindungsgemäßen Widerstandsmeßfühlers,

Fig. 2 zeigt eine Alternative zum ersten Ausführungsbeispiel,

Fig. 3 zeigt das Layout des erfindungsgemäßen Widerstandsmeßfühlers gemäß Figur 1.

Beschreibung der Ausführungsbeispiele

Insofern nicht anders erwähnt, werden alle Schichten des erfindungsgemäßen Widerstandsmeßfühlers im Siebdruckverfahren aufgebracht.

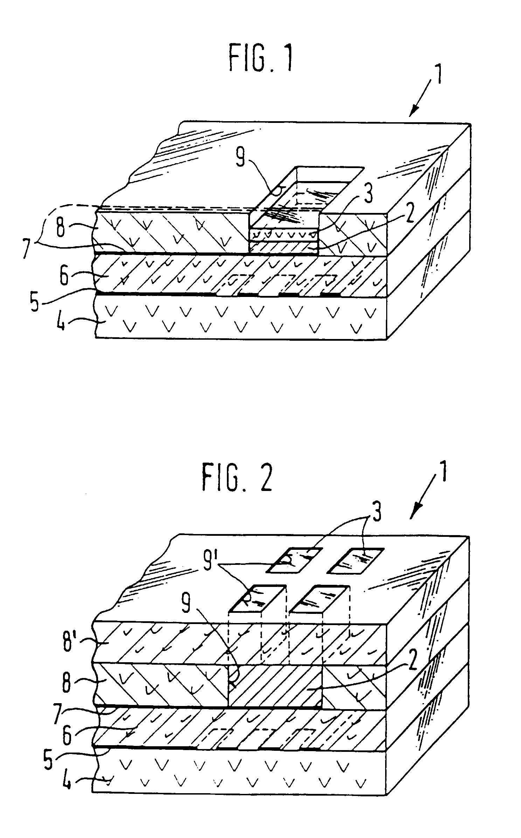

Der Sensor-Trägerkörper 1 aus Fig. 1 wird in Multilayer-Technik, aus Materialien und nach Verfahrensschritten wie in der DE-PS 29 08 916 beschrieben, vorgefertigt. Dazu werden auf einer Folie 4 aus organischem Material und aus isolierendem keramischem Material, vorzugsweise aus Aluminiumoxid mit mehr als 90 Vol.-% Al$_2$O$_3$, ein mäanderförmiger Heizleiter 5 und hierauf, durch eine zweite Folie 6 getrennt, Elektroden 7 und anschließend mindestens eine aluminiumoxidhaltige keramische Deckschicht 8 aufgebracht. Die Deckschicht 8 weist eine Aussparung 9 auf. Die einzelnen Schichten werden gegebenenfalls zwischengetrocknet und/oder vorgesintert. Der gesamte Trägerkörper 1 wird anschließend bei einer Temperatur von mindestens 1550 °C gesintert.

Die Zwischentrocknung des Trägerkörpers 1 kann auch entfallen, wenn die Schichtenfolge ohne Zwischentrocknung eine ausreichende Stabilität für den Sinterprozeß besitzt.

In einem nächsten Verfahrensschritt wird in die dafür vorgesehene Aussparung 9 der Deckschicht 8 eine Halbleiterschicht 2 in Form einer Suspension oder einer Siebdruckpaste eingebracht. Nach eventuellem Zwischentrocknen der Schicht 2 wird hierauf die poröse Engobe-Schutzschicht 3 aufgetragen. Hierzu sind unterschiedliche Verfahren möglich. Die Schicht 3 kann z. B. durch Eintropfen einer Engobe-Suspension, durch Aufdrucken einer Siebdruckpaste oder durch Einlegen einer porös sinternden Folie erzeugt werden.

Im letzten Verfahrensschritt wird der Widerstandsmeßfühler bei 1150 bis 1400 °C gesintert.

Gemäß einer bevorzugten Ausführungsform kann auf den gesinterten Trägerkörper 1 zunächst eine Halbleiterschicht 2 aufgetragen und bei 1150 bis 1400 °C eingesintert werden. Erst danach wird die Engobe-Schutzschicht 3 aufgetragen und bei 1150 bis 1400 °C eingesintert.

Die Engobe-Schicht enthält im gesinterten Zustand Aluminiumtitanat oder Mischungen desselben mit Metalloxiden. Als solche können z. B. Titandioxid, Zirkondioxid, yttriumstabilisiertes Zirkondioxid, Magnesiumspinell oder Zirkontitanat eingesetzt werden. Als besonders vorteilhaft haben sich Mischungen von Aluminiumtitanat und Titandioxid mit vorzugsweise weniger als 50 Vol.-% Titandioxid erwiesen. Die Engobe-Zusammensetzung ist erfindungsgemäß solchermaßen ausgewählt, daß keine unzulässige Reaktion mit der Halbleiterschicht 2 stattfindet, weder bei der Herstellung noch beim Betrieb des Meßfühlers. Beispielsweise kann das Aluminiumtitanat ATG der Fa. Dynamit Nobel eingesetzt werden, das zusätzlich zu Aluminiumoxid und Titandioxid Stabilisatoren enthält und das z. B. unter der Bezeichnung "Aluminium Titanate ATG-3" in Gew.-% zu 53,8 % aus $Al_2O_3$, 32,75 % $TiO_2$, 3,0 % $ZrO_2$, 7,9 % $SiO_2$, 2,1 % MgO, 0,2 % $Fe_2O_3$, 0,2 % $Na_2O$ und weniger als 0,05 % CaO besteht.

Zur Verbesserung der Schichtfestigkeit der erfindungsgemäßen Engobe hat sich der Zusatz geringer Anteile silikatischer Flußmittel, z. B. als $SiO_2$-$TiO_2$-$ZrO_2$-Glas als besonders vorteilhaft erwiesen. Die Zugabe der Flußmittel kann auch in Form von metallorganischen Verbindungen erfolgen, wie z. B. Alkoxide, Propyltitanat, Propylzirkonat, Butyltitanat oder Butylzirkonat.

Um den Gaszutritt zur Halbleiterschicht zu gewährleisten, muß die Engobe notwendigerweise porös sein. Dies wird durch Zugabe zur Engobe-Suspension bzw. -Paste von Porenbildnern, wie z. B. Ruß, Theobromin, Indanthren oder Polywachsen unterstützt.

In Fig. 2 ist eine Alternative zu der in Fig. 1 dargestellten Ausführungsform gezeigt, mit der Besonderheit, daß zur Aufnahme der Halbleiterschicht 2 bzw. der Engobe-Schutzschicht 3 jeweils eine Deckschicht 8 bzw. 8' mit entsprechenden Aussparungen vorgesehen ist. Wie aus Fig. 1 und Fig. 2 ersichtlich, kann die Deckschicht 8 z. B. eine größere quadratische Aussparung 9 und die Deckschicht 8' mehrere Aussparungen 9' mit quadratischem Querschnitt aufweisen, die über der Aussparung 9 angeordnet sind. Diese Ausführungsform läßt sich im übrigen in derselben Weise herstellen, wie mit Bezug auf Fig. 1 bereits beschrieben.

Gegenüber dem in Fig. 1 dargestellten Ausführungsbeispiel weist die Variante gemäß Fig. 2 in vorteilhafter Weise dank der gitterförmigen Ausbildung der Deckschicht 8' eine verbesserte mechanische Festigkeit auf.

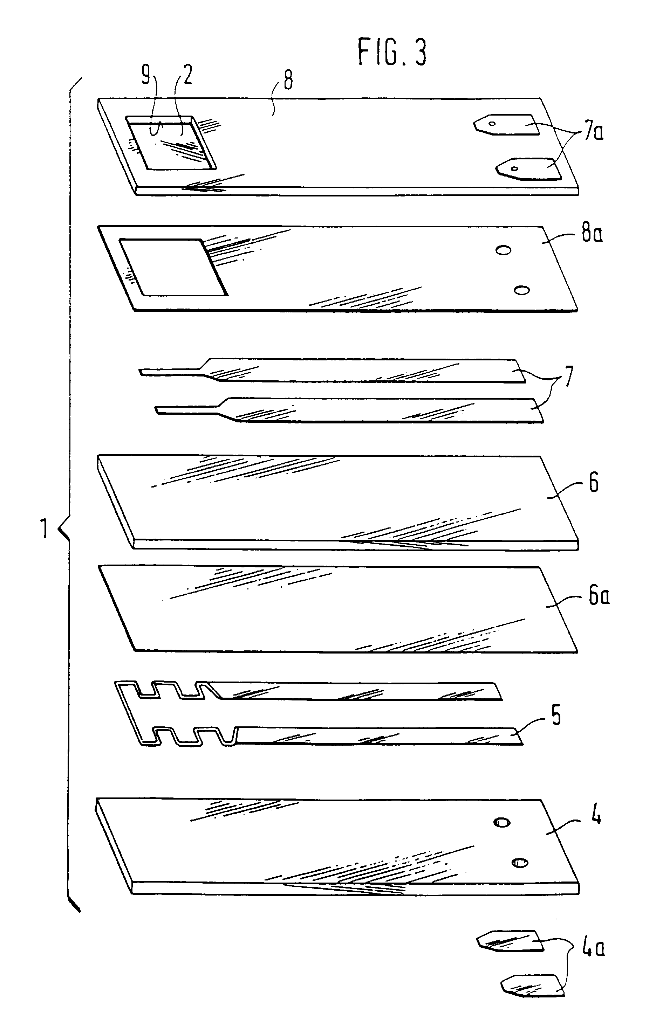

Figur 3 zeigt ein Layout eines weiteren Ausführungsbeispiels des erfindungsgemäßen Widerstandssensors. Ein isolierendes Substrat 4 besteht aus einer Aluminiumfolie mit Durchkontaktierungen, die 90 % Aluminiumoxid enthält, und eine Dicke von 0,5 mm aufweist. Auf der einen Großfläche trägt es Platin-Cermet-Kontakte 4a und auf der anderen Großfläche einen Platin-Cermet-Heizleiter 5. Es folgt eine Siebdruckschicht eines interlaminaren Binders 6a, die aus 90 % Aluminiumoxid besteht. Auf einer Trennfolie (6) von 0,5 mm Dicke sind Elektroden 7 aufgebracht, die aus 90 % Platin-Cermet bestehen. Auf die Zuleitungen der Elektroden 7 wird eine weitere Schicht eines interlaminaren Binders 8a, aus 90 % Aluminiumoxid, aufgebracht und hierauf eine oder zwei Decktolien von 0,5 mm Dicke und aus 90 % Aluminiumoxid aufgebracht oder aufgeklebt. Die Deckfolie 8 weist eine Aussparung 9 auf sowie Kontakte 7a mit Durchkontaktierungslöchern für die Elektroden 7.

Der auf diese Weise vorgefertigte Sensor-Trägerkörper wird bei Temperaturen zwischen 1500 und 1650 °C gesintert und anschließend in die dafür vorgesehene Aussparung 9 der Deckschicht 8 die Halbleiterschicht 2 und die Engobe-Schutzschicht 3 eingebracht und eingesintert bei Temperaturen zwischen 1150 und 1400 °C, vorzugsweise bei 1200 bis 1 300 °C.

Die Wirkungsweise des erfindungsgemäßen Widerstandsmeßfühlers wird am Beispiel eines Titandioxid-Sensors erläutert. Sie beruht auf dem chemischen Gleichgewicht zwischen Gitterdefekten im Titandioxid und gasförmigem Sauerstoff der umgebenden Atmosphäre. Eine niedrige Sauerstoffkonzentration in der Atmosphäre, wie zum Beispiel für den Fall eines fetten Gemisches oder im Vakuum, bedingt durch den großen Unterschied der Sauerstoffaktivität zwischen Titandioxid und Atmosphäre den Übergang des Sauerstoffions aus dem Titandioxid in die Atmosphäre. Innerhalb des Titandioxids entstehen somit sauerstoffbedingte Gitterdefekte und freie Elektronen. Infolge der Bildung freier Elektronen fällt somit im fetten Bereich der Widerstand des Sensor. Im Magerbereich findet die entgegengesetzte Reaktion statt, der Widerstand des Sensors nimmt daher zu.

Allgemein gilt die Beziehung:

$$R_t = A \cdot \exp(E/kT) \cdot (p_{O_2})^{1/n},$$

worin A eine Konstante ist, E die Aktivierungsenergie für die Bildung des Gitterdefektes, k die Bolzmann-Konstante und n eine Konstante ist, die von der Natur der Gitterdefekte abhängt. Ihr Wert beträgt im Temperaturbereich der Sauerstoffkonzentrationsmessung ungefähr 4 und ist auf die Leitfähigkeit über $Ti^{3+}$-Stellen zurückzuführen.

Diese Gleichung zeigt, daß, bei konstanter Umgebungstemperatur, der Widerstand des Sensors ausschließlich von der Sauerstoffkonzentration abhängt. Dabei darf jedoch keine chemische oder mechanische Veränderung der Halbleiterschicht stattfinden, die eine Widerstandsänderung bewirkt.

**Patentansprüche**

1. Widerstandsmeßfühler zur Erfassung des Sauerstoffgehaltes in Gasgemischen, mit einem Tragkörper (1) mit einem isolierenden keramischen Substrat (4, 6), auf dem schichtweise übereinanderliegend getrennte Elektroden, eine Deckschicht (8, 8') mit einer Öffnung (9, 9'), eine halbleitende Widerstandsschicht (2) und eine poröse keramische Schutzschicht (3) angeordnet sind, wobei vorgesehen ist, daß die Elektroden (7) in einer Schichtebene beabstandet nebeneinander angeordnet sind, daß die Deckschicht (8, 8') über der Schichtebene der Elektroden (7) aufgebracht ist, daß die Öffnung als wenigstens eine rahmenförmige Aussparung (9, 9') ausgebildet ist, derart, daß die Seitenflächen der Aussparung bis auf die Schichtebene der Elektroden (7) reichen und zumindest annähernd senkrecht dazu verlaufen, daß die halbleitende Widerstandsschicht (2) innerhalb der rahmenförmigen Aussparung angeordnet ist, so daß die Grundfläche der Aussparung (9, 9') vollständig mit der Widerstandsschicht (2) ausgefüllt ist, daß über die Widerstandsschicht (2) die poröse Schutzschicht bedeckungsfrei in die Aussparung gelegt ist, und daß die Schutzschicht derart in der Aussparung (9, 9') eingebracht ist, daß deren Oberfläche in oder unterhalb der Ebene der Oberfläche der äußeren Deckschicht (8, 8') liegt.

2. Widerstandsmeßfühler nach Anspruch 1, dadurch gekennzeichnet, daß sich die Deckschicht aus zwei Deckschichten (8, 8') zusammensetzt, daß die erste Deckschicht (8) mit einer ersten Aussparung (9) versehen ist, die mit der Widerstandsschicht (2) ausgefüllt ist, daß über der ersten Deckschicht (8) die weitere Deckschicht (8') mit wenigstens einer weiteren Aussparung (9') aufgebracht ist, so daß die Widerstandsschicht (2) umschlossen ist und ihre meßgasseitige, freie Kontaktfläche von der Deckschicht (8') teilweise abgedeckt ist, und daß die poröse Schutzschicht (3) in der weiteren Aussparung (9') angeordnet ist.

3. Widerstandsmeßfühler nach Anspruch 1, dadurch gekennzeichnet, daß das Substrat aus 2 Folien (4, 6) besteht, wobei auf die erste Folie ein Heizleiter (5) und darauf durch die zweite Folie getrennt die Elektroden (7) aufgebracht sind.

4. Widerstandsmeßfühler nach Anspruch 1, dadurch gekennzeichnet, daß die Schutzschicht (3) als anorganische Bestandteile Aluminiumtitanat oder Mischungen hiervon mit Titandioxid, mit Zirkoniumdioxid, mit yttriumstabilisiertem Zirkoniumdioxid, mit Magnesium-Spinell oder mit Zirkoniumtitanat, vorzugsweise eine Mischung aus Aluminiumtitanat mit weniger als 50 Vol.% Titandioxid enthält.

5. Widerstandsmeßfühler nach Anspruch 4, dadurch gekennzeichnet, daß die Schutzschicht (3) als anorganische Bestandteile Stabilisatorzusätze, insbesondere Zirkoniumdioxid, Siliciumdioxid, Magnesiumoxid, Eisenoxid, Natriumoxid oder Calciumoxid enthält.

6. Widerstandsmeßfühler nach Anspruch 4, dadurch gekennzeichnet, daß die Schutzschicht (3) als anorganische Bestandteile Flußmittelphasen, vorzugsweise entsprechend den Flußmittelphasen des Keramiksubstrats enthält.

7. Widerstandsmeßfühler nach Anspruch 1, dadurch gekennzeichnet, daß als Porenbildner für die poröse Schutzschicht (3) Ruß und/oder organische Stoffe, vorzugsweise Theobromin, Indanthren oder Polywachse eingesetzt werden.

8. Verfahren zur Herstellung eines Widerstandsmeßfühlers nach einem der Ansprüche 1 bis 7, dadurch gekennzeichnet, daß zunächst der Tragkörper (1) gebildet wird durch schichtweises Aufbringen von in einer Schichtebene beabstandet nebeineinander angeordneten Elektroden (7) auf einem isolierenden keramischen Substrat (4) und mindestens einer Deckschicht (8, 8'), daß danach das solchermaßen erhaltene Schichtsystem durch Sintern vorgefertigt wird und daß anschließend in wenigstens eine der vorgesehenen Aussparungen (9, 9') der Deckschicht (8, 8') die halbleitende Widerstandsschicht (2) und bedeckungs frei die Schutzschicht (3) eingebracht und die Schutzschicht (3) zusammen mit der Widerstandsschicht (2) oder nach dem Einsintern derselben bei einer niedrigeren Temperatur als der Sintertemperatur des Schichtsystems des Tragkörpers (1) eingesintert wird.

9. Verfahren nach Anspruch 8, dadurch gekennzeichnet, daß die Widerstandsschicht (2) durch Einsaugen durch Kapillarkräfte oder gegebenenfalls durch Einsaugen durch seitliche Entlüftungsöffnungen in den vorgefertigten Trägerkörper (1) eingebracht wird.

10. Verfahren nach Anspruch 8, dadurch gekennzeichnet, daß die Aussparung (9), die zur Aufnahme der Halbleiterschicht (2) nach Fertigstellung des Trägerkörpers (1) dient, vor dem Sintern mit einem Hohlraumbildner, vorzugsweise Theobromin, weitgehend gefüllt wird.

11. Verfahren nach Anspruch 8, dadurch gekennzeichnet, daß in Aussparungen (9, 9') der Deckschichten (8, 8') die Widerstandsschicht (2) sowie die poröse Schutzschicht (3) durch Eintropfen einer Suspension aufgebracht und die Widerstandsschicht (2) und die Schutzschicht (3) gemeinsam oder nacheinander eingesintert werden.

12. Verfahren nach Anspruch 8, dadurch gekennzeichnet, daß in Aussparungen (9, 9') der Deckschichten (8, 8') die Widerstandsschicht (2) sowie die poröse Schutzschicht (3) in Form von Siebdruckpasten aufgebracht und gemeinsam oder nacheinander eingesintert werden.

13. Verfahren nach Anspruch 8, dadurch gekennzeichnet, daß in Aussparungen (9, 9') der Deckschichten (8, 8') die Widerstandsschicht (2) sowie die poröse Schutzschicht (3) in Form von porös sinternden Folien aufgebracht und gemeinsam oder nacheinander eingesintert werden.

**Claims**

1. Resistive sensor for determining the oxygen content in gas mixtures, having a support body having an insulating ceramic substrate (4, 6) on which separate electrodes, a cover layer (8, 8') having an opening (9, 9'), a semiconducting resistive layer (2) and a porous ceramic protective layer (3) are arranged one above the other in layers, provision being made that the electrodes (7) are arranged next to one another but spaced apart in a layer plane, that the cover layer (8, 8') is applied over the layer plane of the electrodes (7), that the opening is designed as at least one frame-like recess (9, 9'), such that the side faces of the recess reach down to the layer plane of the electrodes (7) and extend at least approximately perpendicularly thereto, that the semiconducting resistive layer (2) is arranged within the frame-like recess so that the base of the recess (9, 9') is completely filled with the resistive layer (2), that the porous protective layer is applied without covering over the resistive layer (2) in the recess, and that the protective layer is introduced into the recess (9, 9') in such a way that its surface lies in or below the plane of the surface of the outer cover layer (8, 8').

2. Resistive sensor according to Claim 1, characterized in that the cover layer is composed of two cover layers (8, 8'), in that the first cover layer (8) is provided with a first recess (9) which is filled with the resistive layer (2), in that the further cover layer (8') having at least one further recess (9') is applied over the first cover layer (8), so that the resistive layer (2) is enclosed and its free contact face, on the same side as the gas to be measured, is partly covered by the cover layer (8'), and in that the porous protective layer (3) is arranged in the further recess (9').

3. Resistive sensor according to Claim 1, characterized in that the substrate consists of two sheets (4, 6), a heating conductor (5) being applied to the first sheet and the electrodes (7) being applied thereon while being separated by the second sheet.

4. Resistive sensor according to Claim 1, characterized in that, as inorganic constituents, the protective layer (3) contains aluminium titanate or mixtures thereof with titanium dioxide, with zirconium dioxide, with yttrium-stabilized zirconium dioxide, with magnesium spinal or with zirconium titanate, preferably a mixture of aluminium titanate with less than 50 vol% of titanium dioxide.

5. Resistive sensor according to Claim 4, characterized in that, as inorganic constituents, the protective layer (3) contains stabilizer additives, in particular zirconium dioxide, silicone dioxide, magnesium oxide, iron oxide, sodium oxide or calcium oxide.

6. Resistive sensor according to Claim 4, characterized in that, as inorganic constituents, the protective layer (3) contains flux phases, preferably corresponding to the flux phases of the ceramic substrate.

7. Resistive sensor according to Claim 1, characterized in that carbon black and/or organic materials, preferably theobromine, Indanthrene or polyethylene waxes are used as pore-forming agents for the porous protective layer (3).

8. Method for producing a resistive sensor according to one of Claims 1 to 7, characterized in that the support body (1) is firstly formed by layered application of electrodes (7), arranged next to one another but with spacing in a layer plane, to an insulating ceramic substrate (4), and of at least one cover layer (8, 8'), in that the layer system obtained in this way is then prefabricated by sintering, and in that the semiconducting resistive layer (2) and, without covering, the protective layer (3) are then introduced into at least one of the recesses (9, 9') in the cover layer (8, 8') which are provided and the protective layer (3) together with the resistive layer (2), or after the sintering of the latter, is sintered at a lower temperature than the sintering temperature of the layer system of the support body (1).

**9.** Method according to Claim 8, characterized in that the resistive layer (2) is introduced into the prefabricated supporting body (1) by absorption through capillary forces or, if appropriate, by absorption through lateral vent openings.

**10.** Method according to Claim 8, characterized in that the recess (9) used to accommodate the semiconductor layer (2) after fabrication of the supporting body (1) is substantially filled with a cavity-forming agent, preferably threobromine, before the sintering.

**11.** Method according to Claim 8, characterized in that, in recesses (9, 9') of the covers layers (8, 8'), the resistive layer (2) as well as the porous protective layer (3) are applied by drop-wise introduction of a suspension, and the resistive layer (2) and the protective layer (3) are sintered together or one after the other.

**12.** Method according to Claim 8, characterized in that, in recesses (9, 9') of the cover layers (8, 8'), the resistive layer (2) as well as the porous protective layer (3) are applied in the form of a screen-printing pastes and are sintered together or one after the other.

**13.** Method according to Claim 8, characterized in that, in recesses (9, 9') of the cover layers (8, 8'), the resistive layer (2) as well as the porous protective layer (3) are applied in the form of a porously sintering sheets and are sintered together or one after the other.

**Revendications**

**1.** Capteur de mesure par résistance pour la détermination du taux d'oxygène dans un mélange de gaz comprenant un corps de support avec un substrat isolant en céramique (4, 6) sur lequel sont disposées par couches des électrodes séparées, une couche de recouvrement (8, 8') avec une ouverture (9, 9'), une couche de résistance semi-conductrice (2) et une couche de protection en céramique poreuse (3), dans lequel il est prévu que les électrodes (7) se trouvent écartées l'une de l'autre dans une même couche, que la couche de recouvrement (8, 8') soit déposée sur la couche des électrodes (7), que l'ouverture soit réalisée au moins comme un évidement en forme de cadre réalisé de sorte que les parois latérales de l'évidement arrivent jusqu'au plan de la couche des électrodes (7) et s'étendent au moins approximativement orthogonalement à celles-ci, que la couche de résistance semi-conductrice (2) se trouve à l'intérieur de l'évidement en forme de cadre de telle sorte que la surface de base de l'évidement (9, 9') soit entièrement remplie par la couche de résistance (2), que sur la couche de résistance (2) est placé dans l'évidement, la couche poreuse de protection sans couverture et que la couche de protection est disposée dans l'évidement (9, 9') de telle sorte que sa surface supérieure se trouve dans ou au-dessous du plan de la surface de la couche de recouvrement extérieure (8, 8').

**2.** Capteur selon la revendication 1, caractérisé en ce que la couche de recouvrement se compose de deux couches de recouvrement (8, 8'), que la première couche de recouvrement (8) est prévue avec un premier évidement (9) rempli avec la couche de résistance (2) et que l'on dispose sur la première couche de recouvrement (8) l'autre couche de recouvrement (8') avec au moins un autre évidement (9') de telle sorte que la couche de résistance (2) soit entourée et que sa surface de contact libre du côté de la mesure du gaz soit partiellement recouverte par la couche de recouvrement (8') et que la couche de protection poreuse (3) soit disposée dans l'autre évidement (9').

**3.** Capteur selon la revendication 1, caractérisé en ce que le substrat se compose de deux feuilles (4, 6), un filament étant disposé sur la première feuille et les électrodes (7) étant déposées sur celle-ci, traversant la seconde feuille.

**4.** Capteur selon la revendication 1, caractérisé en ce que la couche de protection (3) comporte en tant que composant organique, du titanat d'aluminium ou un mélange de celui-ci avec du dioxyde de titane, du dioxyde de zirconium, un dioxyde de zirconium stabilisé à l'yttrium, du spinelle de magnésium ou du titanat de zirconium, de préférence avec un mélange de titanat d'aluminium avec moins de 50 % du volume de dioxyde de titane.

**5.** Capteur selon la revendication 4, caractérisé en ce que la couche de protection (3) contient des additifs de stabilisation sous la forme de composants organiques, en particulier du dioxyde de zirconium, du dioxyde de silicium, du dioxyde de magnésium, du dioxyde de fer, du dioxyde de sodium ou du dioxyde de calcium.

**6.** Capteur selon la revendication 5,
caractérisé en ce que
la couche de protection (3) contient comme composants organiques des fondants de préférence correspondants aux fondants des substrats céramiques.

**7.** Capteur selon la revendication 1,
caractérisé en ce que
comme constituteur de pores pour la couche de protection poreuse (3) on prévoit du noir de fumée et/ou des matières organiques, de préférence de la théobromine, de l'indanthrène ou des polycires.

**8.** Procédé pour la réalisation d'un capteur de mesure par résistance selon l'une des revendications 1 à 7, caractérisé en ce qu'
au moins le corps de support (1) est réalisé par une dépose par couches d'électrodes (7) disposées côte à côte dans un même plan avec un écart entre elles sur un substrat isolant en céramique (4) et au moins une couche de recouvrement (8, 8') et que le système de couches ainsi réalisé est ensuite préfabriqué par frittage et qu'ensuite, dans au moins un des évidements prévus (9, 9') de la couche de recouvrement (8, 8') on insère la couche de résistance semi-conductrice (2) non recouverte et la couche de protection (3) ou qu'après le frittage de celles-ci à une température inférieure à la température de frittage du système de couche du corps de support (1).

**9.** Procédé selon la revendication 8,
caractérisé en ce que
la couche de résistance (2) est amenée dans le corps de support (1) préfabriqué par aspiration par la force capillaire ou le cas échéant par aspiration par des trous d'aération latéraux.

**10.** Procédé selon la revendication 8,
caractérisé en ce que
l'évidement (9) servant à recevoir la couche semi-conductrice (2), après assemblage du corps de support (1), est rempli avant frittage avec un constituteur de pores, de préférence de la théobromine.

**11.** Procédé selon la revendication 8,
caractérisé en ce que
dans les évidements (9, 9') des couches de recouvrement (8, 8'), la couche de résistance (2) ainsi que la couche de recouvrement poreuse (3) sont amenées par instillation d'une suspension et que la couche de résistance (2) et la couche de protection (3) sont frittées ensemble ou l'une après l'autre.

**12.** Procédé selon la revendication 8,
caractérisé en ce que
dans les évidements (9, 9') des couches de recouvrement (8, 8'), la couche de résistance (2) ainsi que la couche de protection poreuse (3) sont amenées sous la forme de pâtes de sérigraphie et frittées ensemble ou séparément.

**13.** Procédé selon la revendication 8,
caractérisé en ce que
dans les évidements (9, 9') des couches de recouvrement (8, 8'), la couche de résistance (2) ainsi que la couche de protection poreuse (3) sont amenées sous la forme de feuilles poreuses frittées et sont frittées ensemble ou séparément.

## FIG. 1

## FIG. 2

# FIG. 3